# EUROPÄISCHE PATENTSCHRIFT

(11) **EP 0 546 364 B1**
(45) Veröffentlichungstag und Bekanntmachung des Hinweises auf die Patenterteilung: **03.05.2000**
(21) Anmeldenummer: 92119862.8
(22) Anmeldetag: 21.11.1992
(51) Int. Cl.: G05B 19/414, G05B 19/18

(54) **Verfahren und Vorrichtung zum Einrichten von flächigen Elementen unter Bezug auf eine Referenzeinrichtung, insbesondere von Stanzformen od, dgl.**
Method and device for arranging flat elements with respect to a reference adjustment device, especially for a punching die or similar
Méthode et dispositif pour disposer des éléments plans par rapport à un dispositif de réference, en particulier d'un outil de poinçonnage ou équivalent

(30) Priorität: 06.12.1991 DE 4140211
(43) Veröffentlichungstag der Anmeldung: 16.06.1993
(73) Patentinhaber: Meurer Nonfood Product GmbH, D-78315 Radolfzell (DE)
(72) Erfinder: Vossen, Manfred, Ing. Grad. VDI, W-4055 Niederkrüchten 1 (DE)
(74) Vertreter: Hiebsch, Gerhard F., Dipl.-Ing.

(56) Entgegenhaltungen:
- DE-A- 3 916 405
- DE-A- 3 917 919
- US-A- 4 653 369
- IBM TECHNICAL DISCLOSURE BULLETIN Bd. 28, Nr. 1, Juni 1985, ARMONK,N.Y.,USA Seiten 223 - 224 'Automatic Location And Recording System For Semiconductor Chip Sites'

## Beschreibung

Die Erfindung betrifft ein Verfahren zum Einrichten von Stanzformen od.dgl. sowie zum Ausrichten von Prägeklischees zu einer Prägevorlage außerhalb einer Stanzmaschine, mittels einer Kamera und ihr zugeordnetem Bildschirm. Zudem erfaßt die Erfindung eine entsprechende Vorrichtung, die zur Durchführung des Verfahrens eingesetzt werden kann.

Durch die DE-A-39 17 919 ist ein Tisch zum Positionieren von Elementen auf einem Träger nach Maßgabe von Referenzdokumenten bekannt geworden mit einer Platte, auf der das Referenzdokument liegt und über der in einer parallelen Ebene eine von einem Wagen getragene erste Videokamera verschiebbar ist. Der Wagen ist längs einer Traverse bewegbar, die ihrerseits seitlich entlang der Platte mit dem Wagen verfahrbar ist. Über einer Arbeitsebene kann in einer parallelen Ebene eine von einem längs einer Brücke bewegbaren Arm getragene zweite Kamera verschoben werden, wobei Arm und Brücke jeweils durch eine elektromechanische Antriebsvorrichtung bewegt zu werden vermag. Die Steuerung der elektromechanischen Antriebsvorrichtungen zum Bewegen der Brücke und des Arms der zweiten Kamera geschieht derart, daß letztere relativ zu den von einem Manipulator gesteuerten und von am Wagen, der Traverse und der Platte montierten ersten Positionsdetektoren erfaßten Bewegungen der ersten Kamera verschoben wird, wobei die elektronische Steuereinrichtung die Genauigkeit der Bewegungen der zweiten Kamera überwacht, um dieser komplementäre Bewegungen zu ermöglichen.

Die vorbekannte Einrichtung ist technisch aufwendig, da zwei getrennte Systeme erforderlich sind, zudem ist sie erheblich kostenträchtig.

Die notwendige Prägevorlage wird aufgeheizt und verzieht sich, was zu Ungenauigkeiten führt. Hinzu kommen Abweichungen zwischen den beiden Systemen durch unvermeidliche Geometriefehler in den beiden Führungssystemen.

Die US-A-4653369 betrifft den sogenannten Anilin- oder Flexodruck und befaßt ich mit einer Vorrichtung zum Aufbringen einer flexographischen Platte auf einen Druckzylinder; sie soll sinngemäß die Aufgabe lösen helfen, die Richtzeit für das Aufbringen der Platte durch Verbesserung von deren Paßgenauigkeit beim Wechselvorgang zu verkürzen. Die entsprechende Vorrichtung enthält einen Basistisch mit transluzenter ebener Oberfläche, zu der die Rotationsachse für einen drehbaren Rahmen senkrecht verläuft. Jene -- bevorzugt von unten her beleuchtete -- Oberfläche wird von einer Fernsehkamera überwacht, deren Aufnahme einem Bildschirm mit Markierungen zugeleitet wird. Letztere dienen zum Vergleich mit Registriersymbolen einer auf der Oberfläche des Basistisches liegenden Druckplatte. Ist diese ausgerichtet, wird sie mit Befestigungsdurchbrüchen versehen.

Kartonagen werden mit sogenannten Bandstahlschnitten ausgestanzt. Bandstahlschnitte sind Stanzformen, bei denen bandförmige Messer und Falzlinien, den Konturen der Kartonagen folgend, in Schlitzen einer Platte (vorzugsweise eine Vielschicht-Sperrholz-Platte) angeordnet sind. Die Bandstahlschnitte werden, zum Gebrauch in den Stanzautomaten, in Schließrahmen eingespannt.

Viele höherwertige Kartonagen werden des gefälligen Aussehens wegen mit Prägungen versehen. Prägungen können zum einen Heißfolienprägungen sein, bei denen farbige, glänzende und/oder metallisierte Folien unter Wärmeeinwirkung auf die Zuschnitte geprägt werden und zum anderen spricht man von Prägung, wenn das Material reliefartig durch Prägeklischees verformt wird. Reliefprägung kann auch mit Heißfolien vorgenommen werden oder am unbedruckten oder bedruckten Bogen.

Welches Verfahren auch immer zur Anwendung kommt, aufgrund der hohen Qualitätsanforderung an die Positionsgenauigkeit der Klischees zum Bogen, ist mit extrem langen Einrichtezeiten an den Stanzmaschinen zu rechnen.

In Kenntnis dieser Gegebenheiten hat sich der Erfinder das Ziel gesetzt, ein Verfahren zum Einrichten von Stanzformen in der Verpackungsindustrie sowie zum Ausrichten von Prägeklischees zu einer Prägevorlage dafür zu schaffen, um eine verbesserte Handhabung zu ermöglichen.

Zur Lösung dieser Aufgabe führt die Lehre des unabhängigen Patentanspruchs. Besonders günstige Weiterführungen des Erfindungsgegenstandes sind den Unteransprüchen zu entnehmen.

Erfindungsgemäß soll die Kameraposition über einen die Kamera aufnehmenden Schließrahmen sowie eine Markierung an einer Seite des Schließrahmens gesetzt und so lange verstellt werden, bis die Abbildung der Markierung durch die Kamera auf dem Bildschirm mit einer Linie eines Fadenkreuzes deckungsgleich ist. Dann wird die Kamera über eine zweite -- mit der ersten etwa fluchtende -- Markierung am anderen Ende des Schließrahmens geführt und anschließend der hintere Teil des Schließrahmens rechtwinkelig zur ersten Fahrrichtung so lange verschoben, bis die Abbildung der zweiten Markierung auf dem Bildschirm deckungsgleich mit jener Fadenkreuzlinie ist. Nunmehr wird über der Stanzform die Prägevorlage unter Einsatz einer mit Markierungen versehenen Trägerplatte angeordnet, die Prägevorlage in einer Position für ein erstes Messer und/oder für die Mitte der Prägevorlage eingerichtet sowie zur Trägerplatte unverrückbar festgelegt.

Verfahrensgemäß wird jene Stanzform eingeschlossen und dabei die Parallelität zur ersten Fahrrichtung über die Fadenkreuzlinie eingestellt.

Nach dem Einrichten der Stanzform wird gemäß einem weiteren Merkmal der Erfindung über der Stanzform die Prägevorlage unter Einsatz einer mit Markierungen versehenen Trägerplatte angeordnet sowie die Prägevorlage in einer ersten Messerposition und zur Bogenmitte eingerichtet, sodann zur Trägerplatte unverrückbar festgelegt.

Nunmehr werden erfindungsgemäß auf der zur Standerfassung vorbereiteten Prägevorlage die Prägestellen fortlaufend nummeriert.

Im Rahmen der Erfindung liegt es, am Bildschirm vor dem Prägevorgang von dem bis dahin eingestellten Schwarz/Weiß-Modus auf einen Farbmodus zu wechseln.

Nun wird die Kamera über eine Markierung gefahren und das Fadenkreuz des Bildschirms damit in Deckung gebracht, um so die Ursprungsposition festzulegen und festzuhalten; im weiteren Verlauf des Verfahrens soll die Kamera an der Ursprungspositon zur ersten Prägestelle gefahren und diese auf dem Bildschirm abgebildet sowie gespeichert werden.

Nach dem Speichern der Prägestellen kann man die Trägerplatte mit der Prägevorlage entfernen. Durch Aufruf einer Prägestelle ist es nun möglich, das Prägeklischee zu setzen, wobei man durch Ortsveränderung dessen Abbildung auf dem Bildschirm mit der Abbildung der Prägestelle in Deckung bringt; das Prägeklischee wird so positionsgenau auf der Prägeform befestigt.

Von besonderer Bedeutung ist der rechnergestützte Einsatz des Verfahrens für das Herstellen von Elementen zum Heißprägen, bei dem bekanntlich eine Längenvermehrung bzw. Temperaturerhöhung entsteht. Die vorgegebene Längenänderung der Prägeform bzw. des Prägeklischees unter Hitzeeinfluß wird mittels Simulation der Wärmedehnung auf dem Bildschirm als abweichende Position angezeigt, die Prägeklischees werden in kaltem Zustand gesteuert enger gesetzt; die entsprechenden Verkürzungsmaße können ohne weiteres vom Rechner ermittelt und eingebracht werden.

Im Rahmen der erfindungsgemäßen Aufgabe liegt eine Vorrichtung mit einer über einer Tischplatte od.dgl. Ebene verfahrbaren Traverse als Bewegungsbahn für eine an ihr längs bewegliche Kamera mit zugeordnetem Bildschirm sowie einem Längs- und einem Quermeßsystem, welche zusammen die Position der über ihnen fahrbaren Kamera in zwei Koordinaten bestimmen und in jenem Rechner der Vorrichtung speicherbar angeschlossen sind.

Zur Festlegung und Unterfütterung der Präge-(Stanz-)Form sind einer ortsfesten Auflageplatte der Tischplatte verschiebbare Leisten zugeordnet.

Erfindungsgemäß ist die Kamera in einem Halter der Traverse auswechselbar vorgesehen und zudem um ihre Achse drehbar bzw. zu dieser neigbar ausgebildet, wobei die entsprechenden Positionen genau eingestellt, gemessen und gespeichert zu werden vermögen. Eine Druckeinrichtung gestattet es erfindungsgemäß, jede Einstellung haltbar zu dokumentieren.

Mit der erfindungsgemäßen Vorrichtung wird bei der Herstellung von Kartonagen od.dgl. einerseits die Qualität positiv beeinflußt und andererseits -- bei bestimmten Produktgruppen -- eine deutliche Reduzierung der Einrichtezeiten an den Stanzautomaten erzielt.

Aufgrund der Holzbauweise können Bandstahlschnitte etwa unter klimatischen Einflüssen leiden, kleiner oder größer werden und sich verziehen. Mit der erfindungsgemäßen Meßvorrichtung werden solche Veränderungen im Vorfeld erfaßt, und es kann Ausschuß vermieden werden.

Beim Einschließen der Stanzformen in die Schließrahmen sind Fehler möglich -- z.B. Überspannen, d. h. Komprimieren, oder Verspannen aus dem rechten Winkel --, die beim Einschließen der Bandstahlschnitte auf der Meßvorrichtung durch laufende Kontrolle sogleich erfaßt und korrigiert zu werden vermögen.

Auf der erfindungsgemäßen Einrichtemaschine ist es ebenfalls möglich, für alle Prägeverfahren die Klischees zum Bogenstand in ausreichender Genauigkeit zu positionieren.

Im Gegensatz zum Stande der Technik wird erfindungsgemäß nur ein System mit einer Kamera benötigt, mit einer Führungseinrichtung sowie mit einem x-y-Wegerfassungssystem. Die Vorrichtung ist deshalb preiswert. Zudem wird die Prägevorlage nur kurze Zeit -- offen liegend -- zum erfassen benötigt, was die Wahrscheinlichkeit eines Verziehens gering hält. Zu der folglich gegenüber dem Stande der Technik vorhandenen höheren Genauigkeit tritt hinzu, daß Geometriefehler in der Führungseinrichtung keine Rolle spielen, da sie sowohl beim Erfassen als auch bei der Wiedergabe auftreten.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine Schrägsicht auf eine Vorrichtung mit Kamera;
- Fig. 2:: eine schematische Schrägsicht auf die Kamera mit Beleuchtungseinheiten;
- Fig. 3:: eine Skizze zum Aufbau der Vorrichtung in Draufsicht mit maßstablos zugeordnetem Monitor in Frontansicht;
- Fig. 4:: eine Schrägsicht auf einen Schließrahmen mit Stanzform auf einem Meß- und Arbeitstisch;
- Fig. 5:: eine Schrägsicht auf eine Trägerplatte mit Prägevorlage und zugeordneter Prägeform mit Klischees.
- Fig. 6 bis Fig. 9:: Skizzen zu Bildschirmanzeigen während eines Arbeitsvorganges.

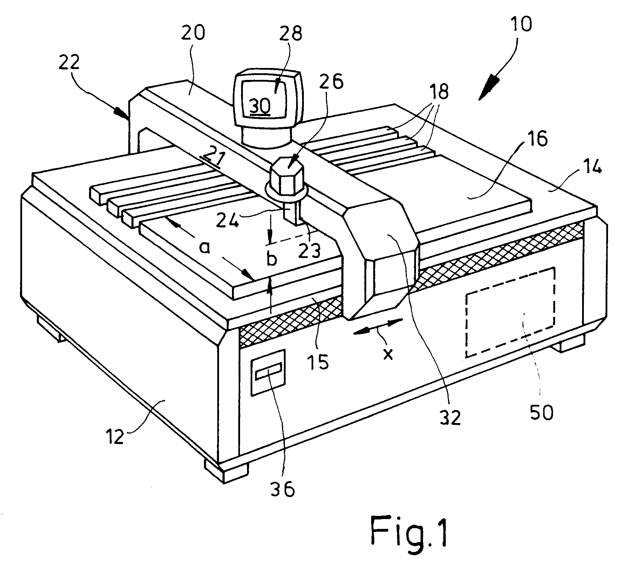

Eine in Fig. 1 dargestellte Vorrichtung 10 weist ein tischartiges Grundgestell 12 mit aufgelegter stabiler Tischplatte 14 aus Gußmaterial auf, die mit einer ortsfesten Auflageplatte 16 der Breite a und drei dazu parallelen Leisten 18 versehen ist; letztere sind verschiebbar und dienen zur Unterfütterung aufzubauender Präge-(Stanz-)Formen.

In einer paralleln Ebene zur Tischplatte 14 verläuft in Abstand b zur Auflageplatte 16 eine verwindungssteife Traverse 20 eines brückenähnlichen Joches 22, das entlang der Tischlängskante 15 in Pfeilrichtung x -- mittels starrer Elemente völlig parallel und gerade geführt --verfahren werden kann.

Im rechten Winkel zur genannten Tischlängskante 15 läuft auf einer ebenfalls starren und geraden Führung 23 an einer Traversenflanke 21 ein Kamerahalter 24, der wahlweise eine Videokamera 26 mit Suchlicht 27 sowie unterschiedlichen Objektiven aufnimmt oder eine Kamera mit Wechselobjekten. Zudem ist auf der Traverse 20 ein Monitor 28 zu erkennen, der wechselweise mit schwarz/weißem oder mit farbigem Bild seines Bildschirms 30 betrieben werden kann.

An der dem Bedienungspersonal zugekehrten Frontseite des Joches 22 ist eine Bedientafel 32 angebracht, auf der über Bildschirmmenüs -- im Dialogverfahren -- die Maschinensteuerung vorgenommen wird. Auch kann über einen bei 36 nur symbolisch angedeuteten Thermodrucker -- etwa nach dem Drücken einer "Ausdruck-Taste" -- jederzeit eine gegenständliche Kopie des aktuellen Bildschirminhaltes gedruckt und ausgegeben werden.

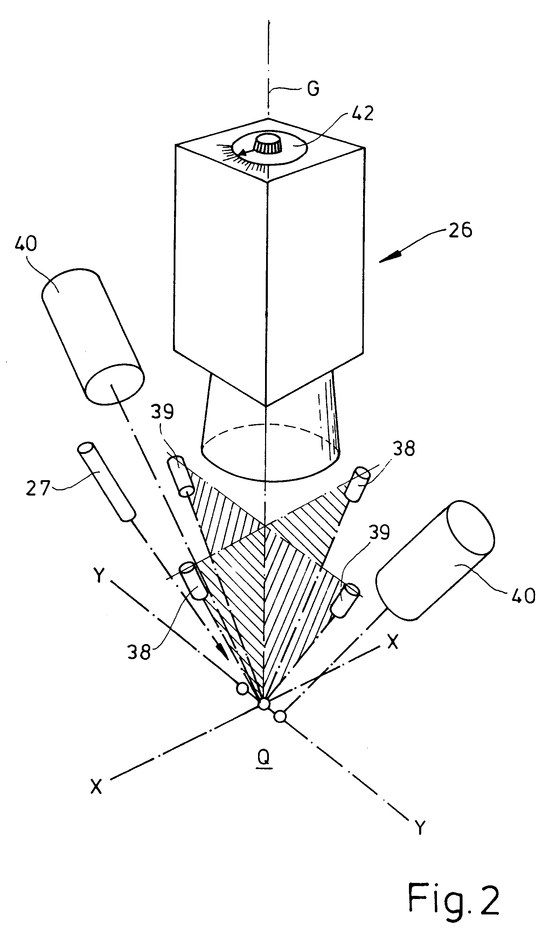

Die Kamera 26 ist gemäß Fig. 2 oberhalb einer Objektebene Q für die verschiedenen Aufgaben mit Leuchten bestückt, und das Suchlicht 27 erleichtert die grobe Positionsfindung. Zwei Lampenpaare 38,39 bringen wahlweise Schräglicht für noch zu erläuternde Stanzmesser in y- bzw. x-Richtung. Zwei weitere Lampen 40 dienen der Ausleuchtung bei Prägeeinrichtungen.

Zum Ausmessen schräg laufender Messer od. dgl. kann die Kamera 26 um ihre senkrechte Achse G um ± 45° gedreht, an einem Winkelnonius 42 jeweils der genaue Winkel abgelesen werden.

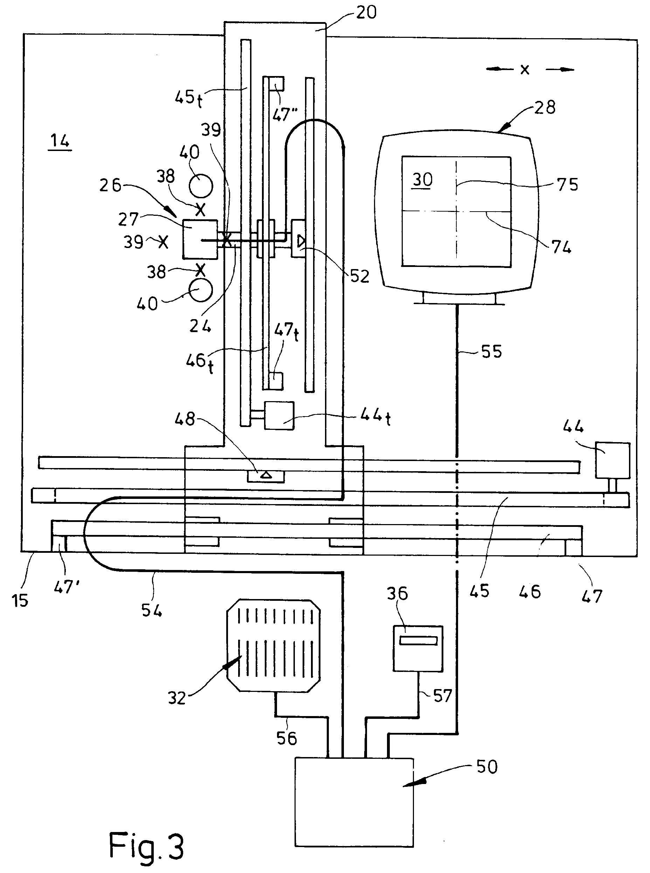

Ein Verfahren des Joches 22 quer zur Tischplatte 14 erfolgt -- wie insbesondere Fig. 3 darstellt -- durch Schrittmotoren 44 über Zahnriementriebe 45, denen Längsführungen 46 mit Endschaltern 47,47' zugeordnet sind. Entsprechend helfen beim Verschieben des Kamerahalters 24 längs der Traverse 20 Schrittmotoren 44ₜ, Zahnriementriebe 45ₜ und Längsführungen 46ₜ mit Endschaltern 47ₜ und 47''.

In beiden Richtungen wird -- durch Längenmeßsysteme -- die augenblickliche Kameraposition bestimmt und einem im Tischgehäuse oder Grundgestell 12 untergebrachten Rechner 50 übermittelt.

Auf der Tischplatte 14 ist parallel zur Längsführung 46 ein Längsmeßsystem 48 zu erkennen sowie auf der Traverse 20 parallel zur dortigen Längsführung 4₆ₜ ein Quermeßsystem 52.

Die Verbindungsleitung von der Kamera 26 über die Längs- bzw. Quermeßsysteme 48 bzw. 52 zum Rechner 50 ist in Fig. 3 mit 54 bezeichnet, die zwischen letzterem sowie dem Monitor 28 mit 55, schließlich jene vom Rechner 50 zur Bedientafel 32 mit 56 sowie zum Drucker 36 mit 57.

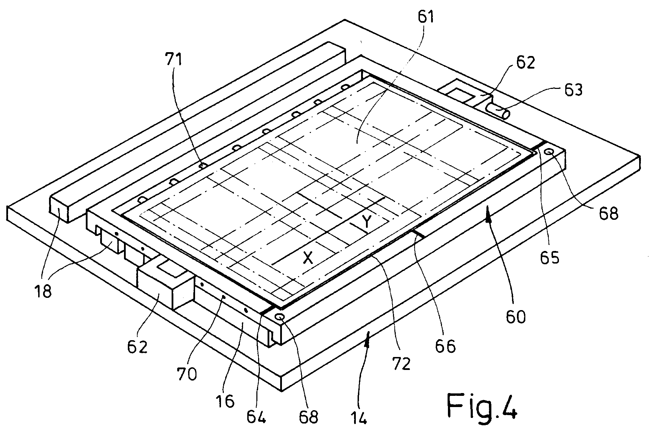

Fig. 4 zeigt einen Schließrahmen 60, der eine Stanzform 61 aufnimmt und -- von unten unterstützt durch die Auflageplatte 16 und je nach Formatgröße, durch die Leisten 18 --mit der Rücken- oder Unterseite nach oben auf der Tischplatte 14 liegt. Der Schließrahmen 60 wird durch Paß- und Klemmstücke 62 exakt in Position gehalten, wozu ergänzend eine Feineinstelleinrichtung 63 vorgesehen ist. Die Paß- und Klemmstücke 62 sind für jeden Typus eines Stanzautomaten individuell gestaltet.

Auf den verschiedenen Schließrahmen 60 befinden sich Markierungsstriche 64,65 für die Position eines ersten Messers und andere Markierungsstriche 66 für die Mitte des Schließrahmens 60. Für Prägarbeiten sind die Schließrahmen 60 außerdem mit zwei Indexbohrungen 68 zur Aufnahme von Gegenelementen versehen mit 70,71 Druckschrauben im Schließrahmen 60 gekennzeichnet.

Bei Beginn der Arbeiten wird die Steuerung der Vorrichtung 10 auf "Messen" zugeschaltet. Der Monitor 28 geht in den Schwarz/Weiß-Modus, und es erscheint auf dem Bildschirm 30 ein Fadenkreuz mit den Koordinaten 74 und 75.

Mittels Knopfdrucksteuerung wird von der Bedientafel 32 aus die Kamera 26 über die Markierung 64 für das erste Meser gesetzt und so lange verfahren, bis deren Abbildung auf dem Monitor 28 mit der horizontalen Fadenkreuzlinie 74 deckungsgleich ist.

Nun wird die Kamera 26 in der x-Achse über die weitere Markierung 65 für das erste Messer geführt. Durch Betätigen der Feineinstellung 63 wird der hintere Teil des Schließrahmens 60 in der Y-Achse so lange verschoben, bis die Abbildung der weiteren Markierung 65 auf dem Monitor 28 deckungsgleich mit der horizontalen Fadenkreuzlinie 74 ist. So wird eine exakte Parallelstellung der ersten Messermarkierungen 64,65 zur Maschinenlängskante (x-Achse) erreicht.

Jetzt kann das Einschließen jener Stanzform 61 vorgenommen werden. Letztere wird gegebenenfalls durch Beilagen 72 an der ersten Messerseite (Greiferrandseite) und durch die Druckschrauben 70,71 in Position gebracht. Hierbei wird die Parallelität zur x-Achse wiederum über die horizontale Fadenkreuzlinie 74 eingestellt, während die Winkelstellung der Stanzmesser (y-Achse) durch die vertikale Fadenkreuzlinie 75 geprüft und korrigiert werden kann.

Es ist nunmehr möglich, Messungen an der Stanzform 61 durchzuführen; z. B. können alle Messerabstände für einen sog. Nutzen oder Zuschnitteil ermittelt werden bzw. die Abstände zwischen zwei Nutzen oder auch die max. Abstände vom ersten zum letzten Messer usw.

Hierzu werden die Meßeinrichtungen für beide Achsen x,y in jeder Position auf Null gestellt und die nächsten Verfahrwege als Absolutmaße -- positiv oder negativ -- auf dem Monitor 28 angezeigt. Mittels eines geeigneten Programms lassen sich ganze Meßreihen erstellen und in individuellen Masken auf dem Bildschirm 30 anzeigen.

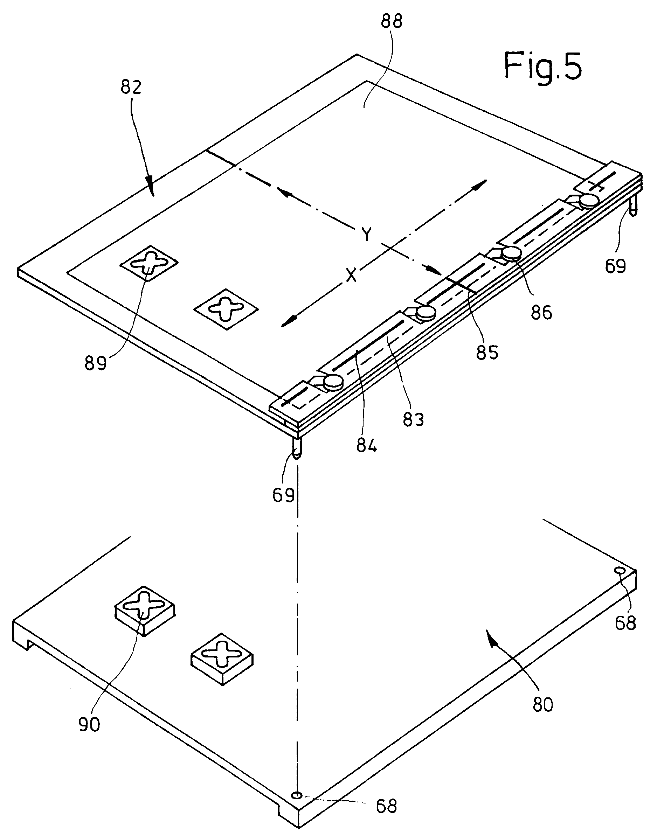

Mit Fig. 5 wird die Arbeit für eine Einrichtemaschine zum Setzen von Prägeklischees erläutert. Zum Kaltprägen wird eine Prägeform 80 -- oder bei kombinierten Stanz- und Prägearbeiten der Schließrahmen 60 -- wie oben beschrieben auf der Tischplatte 14 verriegelt und zur x-Achse parallel ausgerichtet. Bei kombinierten Arbeiten erfolgt hier gegebenenfalls auch das Einschließen einer Präge-/Stanz-Form, die ebenfalls mit 80 bezeichnet sei. Dabei ist auf die genaue Position des ersten Messers und die Übereinstimmung der Markierung 66 -- "Mitte-Schließrahmen" -- zur "Mitte-Präge-/Stanzform" zu achten.

Nun erfolgt das Anbringen der Prägevorlage oberhalb der Präge-/Stanz-Form 80. Hierzu dient eine spezielle Trägerplatte 82, welche über Indexbolzen 69 unter einer transparenten Leiste 82 paßgenau zur Präge-/Stanz-Form 80 ausgerichtet wird sowie mit Markierungen 84 bzw. 85 für die erste Messer-Position bzw. für die Plattenmitte ausgerüstet ist. Zudem enthält die Trägerplatte 82 Klemmeinrichtungen 86 für den Bogenrand.

Im allgemeinen muß die Prägevorlage 88 -- ein bedruckter Bogen oder eine transparente Lay-out-Zeichnung -- noch durch Ausmessen und Einzeichnen von Hand mit den Markierungen für die Bogenmitte und/oder die Position des ersten Messers versehen werden.

Die Trägerplatte 82 wird mittels der Indexbolzen 69 auf der Präge-/Stanz-Form 60,80 befestigt. Danach wird die Prägevorlage 88 in der ersten Messer-Position und zur Bogenmitte genau eingerichtet (± 1 mm Genauigkeit ist ausreichend) und mittels der Bogenklemmeinrichtungen 86 an der Greiferrandseite unverrückbar zur Trägerplatte 82 befestigt. Unter Umständen ist es erforderlich, die Bogenränder ebenfalls --mittels Klebeband od.dgl. -- auf der Trägerplatte 82 festzulegen. Bei welliger Prägevorlage kann innerhalb von -- in Leerbereichen über -- kleinen Ausschnitten eine zusätzliche Befestigung mittels Klebestreifen erfolgen.

Die Prägevorlage 88 ist nun zur "Standerfassung" vorbereitet. Jede Prägestelle 89, die einem Einzelklischee entspricht, ist mit einer fortlaufenden Nummer zu versehen.

Die Steuerung der Vorrichtung 10 wird auf "Prägen" geschaltet.

Der Monitor 28 geht nun in den Farbmodus, und der Bildschirm 30 präsentiert ein Programm-Menü. Nach Anwahl des Menüpunktes "Prägen" erscheint wiederum ein Fadenkreuz 74,75. Mittels Knopfdrucksteuerung wird von der Bedientafel 32 auf die Kamera 26 nun motorisch über das Markierungskreuz 84,85 -- "Mitte Bogen-Position erstes Messer" -- gefahren und so lange verstellt, bis dessen Abbildung auf dem Bildschirm 30 mit dem Fadenkreuz 74,75 deckungsgleich ist. Durch Tastendruck wird diese Kameraposition jetzt vom Rechner 50 intern als Ursprung des Koordinaten-Meßsystems gespeichert; auf dem Monitor 28 nun x = o,y = o angezeigt.

Zur Standerfassung wird mittels Knopfdrucksteuerung die Videokamera 26 motorisch ungefähr über die Mitte der Prägestelle mit der Nummer "1" gefahren, wobei das mitlaufende Suchlicht 27 bei der Positionierung hilft. Die Abbildung der Prägestelle "1" erscheint auf dem Bildschirm 30, ebenso sind die Koordinatenn x und y der augenblicklichen Kameraposition eingeblendet.

Per Taste (n) wird die Nummer der Prägestelle (hier die "1") eingegeben und quittiert. Der Bildschirm 30 zeigt jetzt -- neben der Abbildung der Prägestelle 1 der Prägevorlage -- die Anzeige:

### Prägestelle "1"

X = xxxx,xxx
Y = xxxx,xxx.

Durch Druck einer Taste werden die Prägestellen-Abbildung und die dazugehörigen x,y-Koordinaten unter der Prägestellennummer vom Rechner 50 gespeichert. Nähere Einzelheiten werden weiter unten erörtert.

Mit allen weiteren Prägestellen wird ebenso verfahren. Sind alle Prägestellen bild- und datenmäßig erfaßt, kann die Trägerplatte 82 mit der Prägevorlage 88 von der Präge-/Stanz-Form 60,80 entfernt sowie mit dem Setzen der Prägeklischees 90 begonnen werden.

Nach Aufruf der Prägestelle Nr. "1" erscheint auf dem Bildschirm 30 die gespeicherte Abbildung der Prägestelle Nr. "1" der Prägevorlage 88, und die Kamera 26 nimmt automatisch die Position ein, welche sie zuvor bei der Erfassung der Prägestelle Nr. "1" innehatte. Nach dem Einlegen des Prägeklischees 90 mit der Nr. "1" unter die Kamera 26 erscheint dessen Abbildung ebenfalls auf dem Monitor 28, die Abbildung der Prägevorlage 88 sozusagen überlagernd.

Durch Verschieben des Prägeklischees 90 werden die beiden Abbildungen auf dem Bildschirm 30 zur Deckung gebracht, und das Prägeklischee 90 befindet sich genau an der zum Prägen der Prägevorlage 88 erforderlichen Position; es kann nun endgültig auf der Präge-/Stanz-Form 60,80 befestigt werden.

So wird mit allen weiteren Klischees verfahren. Am Ende kann durch Abfahren aller Positionen eine Kontrolle - und gegebenenfalls eine Korrektur -- vorgenommen werden.

Zum Heißprägen bzw. Heißfolienprägen werden die Prägeformen bzw. Prägeklischees 90 im Stanzautomaten auf Temperaturen bis zum 120°C erhitzt. Dabei treten Längen- und Breitendehnungen auf. Zum Setzen der Prägeklischees 90 verfügt die Maschine über Progamm-Mittel zur Simulation der Wärmedehnungen, an der Bedientafel 32 kann die gewünschte Temperatur eingestellt werden, die Schrumpfmaße werden errechnet.

Das Programm des Rechners 50 beinhaltet Faktoren, die es ermöglichen, beim Setzen des Prägeklischees 90 -- von der Prägevorlage 88 -- abweichende Positionen einzunehmen, d. h. die Prägeklischees 90 werden sinngemäß enger gesetzt, um nach dem Aufheizen auf die Betriebstemperatur in jene richtigen Positionen zu gelangen.

Nach dem Einschalten der Maschine erscheint auf dem Bildschirm 30 das Hauptmenü "Arbeitsprogramme", und über bestimmte Paßwörter wird das Betriebssystem oder das -- für Servicezwecke durch Befugte vorgesehene -- Menü "Einstellprogramme" erreicht. Durch wahlweisen Druck auf Tasten (etwa "S" oder "F") springt der Monitor 28 entweder in den Modus "Schwarz/Weiß" oder in den Farbmodus. Auf dem Bildschirm 30 entsteht ein Fadenkreuz 74, 75 sowie neben diesem eine vorgegebene Maske - und es kann mit dem Formmessen begonnen werden.

Zum Setzen des Prägeklischees erscheint neben dem Fadenkreuz die Aufforderung "1. Messer - Mitte Form anfahren". Die Ausführung dieses Befehls muß bestätigt werden. Die erhaltene Kameraposition gilt aus "Ursprung" oder Referenzeinstellung und wird im Rechner 50 intern mit x = 0 sowie y = 0 verwaltet.

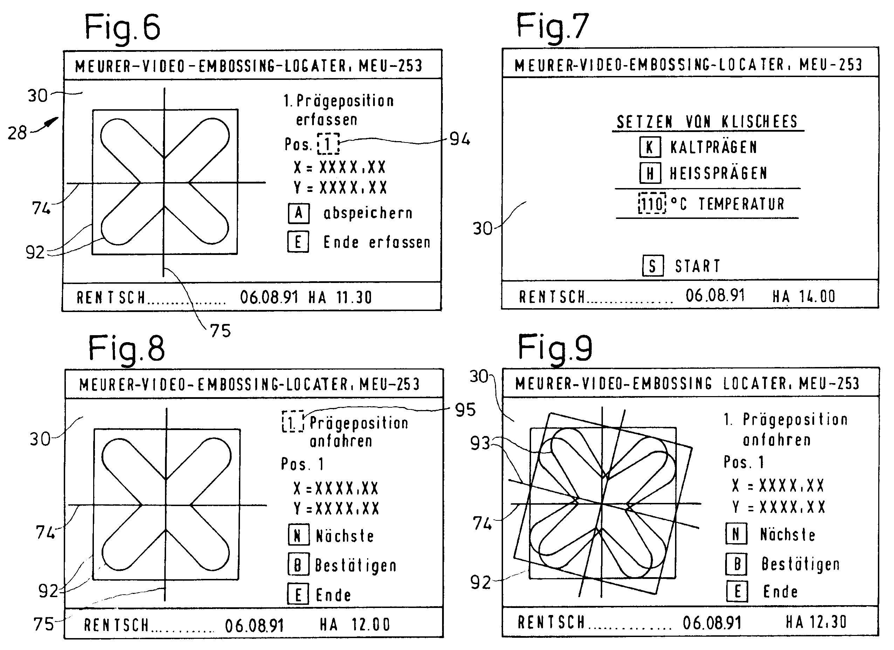

Es folgt die Aufforderung, die 1. Prägeposition anzufahren, wobei beispielsweise ein Bild entsprechend Fig. 6 sichtbar wird.

Durch Tastendruck wird die Kamera 26 über die erste Prägeposition gefahren, so daß nach Fig. 6 ein Emblem 92 od.dgl. ungefähr mittig über dem Fadenkreuz 74, 75 auf dem Bildschirm 30 erscheint.

Wie weiter oben bereits angedeutet, werden angezeigt: 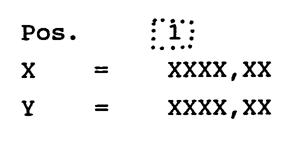 worin 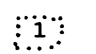 blinkt. Diese Positionsnummer 94 kann geändert werden. Durch Drücken von "A" werden die Abbildung und die Koordinaten unter der Positions Nr. 1 abgespeichert, die Abbildung verschwindet, und es wird die Aufforderung "2. Prägeposition erfassen" angezeigt. Auf diese Weise werden alle Prägepositionen abgespeichert.

Nach dem Erfassen aller Prägepositionen wird durch Tastendruck der Erfassungsvorgang beendet. Die Prägevorlage kann von der Prägeform entfernt werden, es beginnt das Setzen des Klischees. Dabei zeigt der Bildschirm 30 beispielsweise das Bild der Fig. 7.

Nach dem Drücken von "K" und "S" springt der Monitor 28 auf ein weiteres Menü; wird "H" gedrückt, muß noch die Temperaturangabe erfolgen; anschließend gelangt man über "S" in das weitere Menü gemäß Fig. 8.

Das Bild der Fig. 8 unterscheidet sich von jenem der Fig. 6 durch den Hinweis -- rechts oben --:

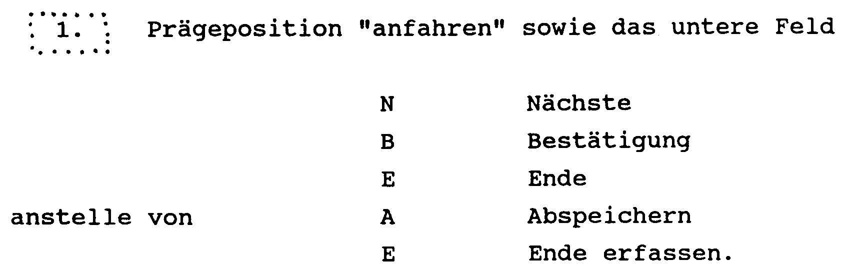

Hierbei erscheint die unter Position 1 abgespeicherte Abbildung der Prägevorlage, und es blinkt die obere Positionsnummer 95.

Die Positions-Nummer kann geändert werden; dann sind vom Bildschirm 30 die neuen Koordinaten ablesbar, ebenfalls ist die zugehörige Abbildung zu erkennen.

Nach Betätigen der Taste B fährt die Kamera 26 automatisch auf die Koordinaten der Position 1. Unter die Kamera 26 wird nun das entsprechende Klischee gelegt und auf dem Bildschirm 30 scheint dessen Abbildung 93 auf, der Abbildung 92 der Prägevorlage überlagert.

Durch Verschieben des Klischees werden die beiden Bilder 92, 93 deckungsgleich gebracht, dann kann das Klischee endgültig montiert werden. Dies ist in Fig. 9 angedeutet.

Nach dem Drücken von "N" erscheint: 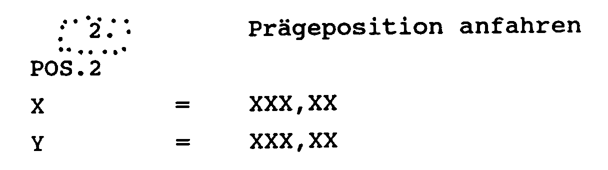 und die unter Pos. 2 abgespeicherte Abbildung der Prägevorlage. Die Kamera 26 fährt automatisch auf die Koordinaten der Pos. 2. Nun kann das zweite Klischee gesetzt werden bzw. das nachfolgende, bis alle Klischees gesetzt sind.

Dann wird durch Drücken von "E" das Erfassen beendet, wonach die Kamera 26 automatisch in ihre Heimatpositionen zurückfährt.

## Patentansprüche

1. Verfahren zum Einrichten von Stanzformen (61,80) sowie zum Ausrichten von Prägeklischees zu einer Prägevorlage (88) außerhalb einer Stanzmaschine mittels einer Kamera (26) und ihr zugeordnetem Bildschirm (30), bei dem die Kameraposition über einem die Stanzform aufnehmenden Schließrahmen (60) sowie eine Markierung (64) an einer Seite des Schließrahmens gesetzt und so lange verstellt wird, bis die Abbildung der Markierung durch die Kamera auf dem Bildschirm mit einer Linie (74) eines Fadenkreuzes deckungsgleich ist, wonach die Kamera über eine zweite, mit der ersten etwa fluchtende Markierung (65) am anderen Ende des Schließrahmens geführt und anschließend der hintere Teil des Schließrahmens rechtwinklig (y) zur ersten Fahrrichtung (x) so lange verschoben wird, bis die Abbildung der zweiten Markierung auf dem Bildschirm deckungsgleich mit jener Fadenkreuzlinie ist, wonach über der Stanzform die Prägevorlage unter Einsatz einer mit zur Festlegung der Ursprungsposition durch die Kamera (26) dienenden Markierungen (84,85) versehenen Trägerplatte (82) angeordnet wird, die Prägevorlage in einer Position für ein erstes Messer und/oder für die Mitte der Prägevorlage eingerichtet sowie dann zur Trägerplatte unverrückbar festgelegt wird.

2. Verfahren nach Anspruch 1, dadurch gekennzeichnet, daß die mit Markierungen (84 bzw. 85) für die Position des ersten Messers bzw. die Plattenmitte ausgerüstete Trägerplatte (82) über Indexbolzen (69) unter einer transparenten Leiste (82) paßgenau zur Stanzform (80) ausgerichtet wird.

3. Verfahren nach Anspruch 1 oder 2, dadurch gekennzeichnet, daß die Kamera (26) über Markierungen (84,85) gefahren und das Fadenkreuz des Bildschirms (30) damit in Deckung gebracht und so die Ursprungsposition festgelegt wird.

4. Verfahren nach einem der Ansprüche 1 bis 3, dadurch gekennzeichnet, daß die Stanzform (61,80) eingeschlossen und dabei die Parallelität zur ersten Fahrrichtung (x) über die Fadenkreuzlinie (74,75) eingestellt wird.

5. Verfahren nach einem der Ansprüche 1 bis 4, dadurch gekennzeichnet, daß auf der zur Standerfassung vorbereiteten Prägevorlage (88) die Prägestellen (89) fortlaufend nummeriert werden.

6. Verfahren nach Anspruch 3 und 5, dadurch gekennzeichnet, daß die Kamera (26) an der Ursprungsposition zur ersten Prägestelle (89) gefahren und diese auf dem Bildschirm (30) abgebildet sowie gespeichert wird.

7. Verfahren nach einem der Ansprüche 1 bis 6, dadurch gekennzeichnet, daS der Bildschirm (30) vor einem Prägevorgang von einem Schwarz/Weiß-Modus in einen Farbmodus versetzt wird.

8. Verfahren nach wenigstens einem der Ansprüche 1 bis 7, dadurch gekennzeichnet, daß nach dem Speichern der Prägestellen die Trägerplatte (82) mit der Prägevorlage (88) entfernt Wird.

9. Verfahren nach wenigstens einem der Ansprüche 1 bis 8, dadurch gekennzeichnet, daß durch Aufruf einer Prägestelle (89) das Setzen des Prägeklischees (90) durchgeführt wird, wobei durch Ortsveränderung dessen Abbildung auf dem Bildschirm (30) mit der Abbildung der Prägestelle in Deckung gebracht sowie das Prägeklischee auf der Prägeform befestigt wird.

10. Verfahren zum Herstellen von Elementen für das Heißprägen nach wenigstens einem der Ansprüche 1 bis 9, dadurch gekennzeichnet, daß vorgegebene Längenänderungen der Prägeform bzw. des Prägeklischees (90) durch Hitzeeinfluß mittels Simulation der Wärmedehnung auf den Bildschirm (30) als abweichende Position angezeigt sowie die Prägeklischees gesteuert enger gesetzt werden.

11. Vorrichtung zum Einrichten von Stanzformen (61,80) sowie zum Ausrichten von Prägeklischees zu einer Prägevorlage (88) außerhalb einer Stanzmaschine, mittels einer Kamera (26) und ihr zugeordnetem Bildschirm (30), bei dem die Kameraposition über einem die Stanzform aufnehmenden Schließrahmen (60) sowie eine Markierung (64) an einer Seite des Schließrahmens setzbar und so lange verstellbar ausgebildet ist, daß die Abbildung der Markierung durch die Kamera auf dem Bildschirm mit einer Linie (74) eines Fadenkreuzes deckungsgleich ist, wobei die Kamera über eine zweite, mit der ersten etwa fluchtende Markierung (65) am anderen Ende des Schließrahmens führbar und anschließend der hintere Teil des Schließrahmens rechtwinkelig (y) zur ersten Fahrrichtung (x) so lange verschiebbar ist, bis die Abbildung der zweiten Markierung auf dem Bildschirm deckungsgleich mit jener Fadenkreuzlinie ist, und wobei über der Stanzform die Prägevorlage unter Einsatz einer mit zur Festlegung der Ursprungsposition durch die Kamera (26) dienenden Markierungen (84,85) versehenen Trägerplatte (82) angeordnet ist, die Prägevorlage in einer Position für ein erstes Messer und/oder für die Mitte der Prägevorlage einrichtbar sowie dann zur Trägerplatte unverrückbar festlegbar ist.

12. Vorrichtung nach Anspruch 11, gekennzeichnet durch ein Längs- und ein Quermeßsystem (48,52) in zwei Koordinaten (x,y), welche die Position der über ihnen fahrbaren Kamera (26) bestimmen und in einem Rechner (50) der Vorrichtung speicherbar angeschlossen sind.

13. Vorrichtung nach Anspruch 11 oder 12, dadurch gekennzeichnet, daß einer ortsfesten Auflageplatte (16) der Tischplatte (14) verschiebbare Leisten (18) zur Unterfütterung der Präge- (Stanz-) Form (80) zugeordnet sind.

14. Vorrichtung nach einem der Ansprüche 11 bis 13, gekennzeichnet durch eine der Prägeform (80) zugeordnete Trägerplatte (82), die mit Rastelementen (69) in Gegenrasten (68) der Prägeform festlegbar sowie mit Markierungen (84,85) für eine erste Messerposition sowie die Plattenmitte versehen ist, wobei die Trägerplatte (82) gegebenenfalls Klemmeinrichtungen (86) für den Rand der Prägevorlage (88) aufweist.

15. Vorrichtung nach einem der Ansprüche 11 bis 14, dadurch gekennzeichnet, daß die Kamera (26) um ihre senkrecht verlaufende Achse (G) drehbar und zu dieser in einen Winkel neigbar aufgehängt ist, bevorzugt in einem Winkel von ± 45°.

16. Vorrichtung nach einem der Ansprüche 11 bis 15, dadurch gekennzeichnet, daß der Kamera (26) bzw. deren Achse (G) wenigstens ein Suchlicht (27) und/oder andere Beleuchtungseinrichtungen (38, 39, 40) zugeordnet sind/ist.

17. Vorrichtung nach einem der Ansprüche 11 bis 16, dadurch gekennzeichnet, daß sie eine Ausgabeeinrichtung (36) für Abdrucke des Inhaltes des Bildschirmes (30) aufweist.

## Claims

1. Method of setting punching dies (61, 80) and aligning embossing plates relative to an embossing copy (88) outside a punching machine by means of a camera (26) and a screen (30) associated therewith, in which the camera position is set over a chase (60) receiving the punching die and a marking (64) on one side of the chase and is adjusted until the image of the marking formed by the camera on the screen is coincident with cross lines (74), after which the camera is guided over a second marking (65) at the other end of the chase approximately aligned with the first marking and then the rear part of the chase is displaced at a right angle (y) to the first direction of travel (x) until the image of the second marking on the screen is coincident with the said cross lines, after which the embossing copy is arranged over the punching die using a carrier plate (82) provided with markings (84, 85) serving to fix the original position by means of the camera (26), the embossing copy is set in a position for a first blade and/or for the centre of the embossing copy and is then fixedly secured to the carrier plate.

2. Method according to claim 1, characterised in that the carrier plate (82) provided with markings (84 and 85) for the position of the first blade or the centre of the plate is aligned accurately relative to the punching die (80) by means of indexing pins (69) below a transparent strip (82).

3. Method according to claim 1 or claim 2, characterised in that the camera (26) is moved over markings (84, 85) and the cross lines of the screen (30) are brought into coincidence therewith, thereby fixing the original position.

4. Method according to one of claims 1 to 3, characterised in that the punching die (61, 80) is enclosed, thereby setting parallelism relative to the first direction of travel (x) via the cross lines (74, 75).

5. Method according to one of claims 1 to 4, characterised in that the embossing points (89) are numbered consecutively on the embossing copy (88) prepared for position detection.

6. Method according to claim 3 and claim 5, characterised in that the camera (26) is moved from the original position to the first embossing point (89) and the latter is imaged on the screen (30) and stored.

7. Method according to one of claims 1 to 6, characterised in that the screen (30) is changed from a black and white mode to a coloured mode prior to an embossing process.

8. Method according to at least one of claims 1 to 7, characterised in that the carrier plate (82) with the embossing copy (88) is removed after the storage of the embossing points.

9. Method according to at least one of claims 1 to 8, characterised in that the embossing plate (90) is set by calling up an embossing point (89), its image on the screen (30) being brought into coincidence with the image of the embossing point by changing its position and the embossing plate being secured to the embossing die.

10. Method of producing elements for hot embossing according to at least one of claims 1 to 9, characterised in that predetermined variations in the length of the embossing die or the embossing plate (90) as a result of the influence of heat are indicated on the screen (30) as a varying position by simulating the thermal expansion and the embossing plate is set closer in a controlled manner.

11. Device for setting punching dies (61, 80) and aligning embossing plates relative to an embossing copy (88) outside a punching machine by means of a camera (26) and a screen (30) associated therewith, in which the camera position can be set over a chase (60) receiving the punching die and a marking (64) on one side of the chase and can be adjusted until the image of the marking formed by the camera on the screen is coincident with cross lines (74), wherein the camera can be guided over a second marking (65) at the other end of the chase approximately aligned with the first marking and then the rear part of the chase can be displaced at a right angle (y) to the first direction of travel (x) until the image of the second marking on the screen is coincident with the said cross lines, and wherein the embossing copy is arranged over the punching die using a carrier plate (82) provided with markings (84, 85) serving to fix the original position by means of the camera (26), the embossing copy can be set in a position for a first blade and/or for the centre of the embossing copy and can then be fixedly secured to the carrier plate.

12. Device according to claim 11, characterised by longitudinal and transverse measuring systems (48, 52) in two coordinates (x, y) which determine the position of the camera (26) which can be moved over them and are connected in such a manner that they can be stored in a computer (50) of the device.

13. Device according to claim 11 or claim 12, characterised in that displaceable strips (18) for supporting the embossing (punching) die (80) from below are associated with a fixed supporting plate (16) of the table top (14).

14. Device according to one of claims 11 to 13, characterised by a carrier plate (82) which is associated with the embossing die (80), can be secured by means of locking elements (69) in mating locking elements (68) of the embossing die and is provided with markings (84, 85) for a first blade position and the centre of the plate, the carrier plate (82) possibly having clamping means (86) for the edge of the embossing copy (88).

15. Device according to one of claims 11 to 14, characterised in that the camera (26) can be rotated about its vertical axis (G) and is suspended at an incline therefrom at an angle, preferably at an angle of ± 45°.

16. Device according to one of claims 11 to 15, characterised in that at least one spotlight (27) and/or other lighting means (38, 39, 40) is/are associated with the camera (26) or its axis (G).

17. Device according to one of claims 11 to 16, characterised in that it has an output means (36) for printing out the contents of the screen (30).

## Revendications

1. Procédé de montage et de réglage d'outils de formage et de poinçonnage (61, 80) ainsi que d'orientation de clichés de formage par rapport à un modèle de formage (88) à l'extérieur d'une machine de formage et de poinçonnage, au moyen d'une caméra (26) et de son écran (30) associé, dans lequel la position de la caméra, au-dessus d'un cadre de fermeture (60) recevant l'outil de formage et de poinçonnage ainsi qu'un marquage (64), est placé sur une face du cadre de fermeture et est déplacé jusqu'à ce que la représentation du marquage par la caméra sur l'écran soit en coïncidence avec une ligne (74) d'un réticule, à la suite de quoi la caméra est guidée sur un deuxième marquage (65) à peu près aligné avec le premier, à l'autre extrémité du cadre de fermeture, et ensuite la partie arrière du cadre de fermeture est déplacée à angle droit (y) par rapport à la première direction de déplacement (x), jusqu'à ce que la représentation du deuxième marquage sur l'écran soit en coïncidence avec la ligne de réticule, et ensuite l'outil de formage et de poinçonnage est disposé sur le modèle de forme, en utilisant une plaque support (82) dotée de marquages (84, 85) servant à la fixation de la position initiale par la caméra (26), le modèle de formage étant monté dans une position correspondant à une première lame et/ou au centre du modèle de formage et ensuite fixé de façon absolument fixe par rapport à la plaque support.

2. Procédé selon la revendication 1, caractérisé en ce que la plaque support (82), équipée de marquages (84, respectivement 85) pour la position de la première lame ou le centre de la plaque, est orientée par rapport à l'outil de formage et de poinçonnage (80) en coïncidence précise, par l'intermédiaire de boulons d'indexation (69), sous une barrette transparente (82).

3. Procédé selon la revendication 1 ou 2, caractérisé en ce que la caméra (26) passe sur les marquages (84, 85) et le réticule de l'écran (30) est ainsi mis en coïncidence et la position initiale est ainsi fixée.

4. Procédé selon l'une des revendications 1 à 3, caractérisé en ce que l'outil de formage et de poinçonnage (61, 80) est bloqué en position et le parallélisme par rapport à la première direction de déplacement (x) est réglé par la ligne de réticule (74, 75).

5. Procédé selon l'une des revendications 1 à 4, caractérisé en ce que les emplacements de formage (89) sont numérotés de façon continue sur le modèle de formage (88) préparé pour la saisie de position.

6. Procédé selon les revendications 3 et 5, caractérisé en ce que la caméra (26) est transportée à la position initiale par rapport au premier emplacement de formage (89) et celui-ci est représenté et mémorisé sur l'écran (30).

7. Procédé selon l'une des revendications 1 à 6, caractérisé en ce qu'on fait passer l'écran (30) d'un mode noir/blanc à un mode couleur, avant d'effectuer un processus de formage et de poinçonnage.

8. Procédé selon au moins l'une des revendications 1 à 7, caractérisé en ce qu'après la mémorisation des emplacements de formage, la plaque support (82) avec le modèle de formage (88) est enlevée.

9. Procédé selon au moins l'une des revendications 1 à 8, caractérisé en ce que, par interrogation d'un emplacement de formage (89), on réalise la mise en place du cliché de formage (90) et, par modification locale, sa représentation est mise en coïncidence sur l'écran (30) avec la représentation de l'emplacement de formage et le cliché de formage est fixé sur l'outil de formage.

10. Procédé de fabrication d'éléments pour le formage à chaud selon au moins l'une des revendications 1 à 9, caractérisé en ce que des modifications prédéterminées de longueur de l'outil de formage ou du cliché de formage (90) sous l'effet de la chaleur, sont affichées par une simulation de la dilatation thermique sur l'écran (30), sous la forme d'écarts de position, et une commande ou un positionnement plus précis du cliché de formage est effectué.

11. Dispositif pour le montage et le réglage d'outils de formage et de poinçonnage (61, 80) ainsi que pour l'orientation de clichés de formage par rapport à un modèle de formage (88) à l'extérieur d'une machine de formage et de poinçonnage, au moyen d'une caméra (26) et d'un écran (30) lui étant associé, dans lequel la position de la caméra sur un cadre de fermeture (60) recevant l'outil de formage, ainsi qu'un marquage (64), sont susceptibles d'être placés sur une face du cadre de fermeture et sont réalisés de façon à être réglables, jusqu'à ce que la représentation du marquage par la caméra sur l'écran soit en coïncidence avec une ligne (74) d'un réticule, la caméra étant susceptible d'être guidée à l'autre extrémité du cadre de fermeture par un deuxième marquage (65) à peu près en alignement avec le premier et ensuite la partie arrière du cadre de fermeture étant déplacée perpendiculairement (y) par rapport à la première direction de déplacement (x), jusqu'à ce que la représentation du deuxième marquage sur l'écran soit en coïncidence avec cette ligne de réticule, et dans lequel le modèle de formage est disposé sur l'outil de formage, en utilisant une plaque support (82) dotée de marquages (84, 85) servant à la fixation de la position initiale par la caméra (26), le modèle de formage étant susceptible d'être monté, en une position d'une première lame et/ou du centre du modèle de formage, puis d'être fixé de façon absolument fixe par rapport à la plaque support.

12. Dispositif selon la revendication 11, caractérisé par un système de mesure en direction longitudinale et par un système de mesure en direction transversale (48, 52), qui travaillent dans deux coordonnées (x, y), qui déterminent la position de la caméra (26) déplaçable au-dessus d'eux et qui sont raccordés de façon à pouvoir la stocker dans un ordinateur (50) appartenant au dispositif.

13. Dispositif selon la revendication 11 ou 12, caractérisé en ce que des barrettes (18) déplaçables, destinées au garnissage sous-jacent de l'outil de formage (poinçonnage) (80), sont associées à une plaque de pose (16) localement fixe de la plaque de table (14).

14. Dispositif selon l'une des revendications 11 à 13, caractérisé par une plaque support (82) associée à l'outil de formage et de poinçonnage (80), et qui est susceptible d'être fixée, à l'aide d'éléments de blocage (69), dans des contre-éléments de blocage (68) de l'outil de formage et de poinçonnage et qui est munie de marquages (84, 85) pour une première position de lame, ainsi que pour le centre de la plaque, la plaque support (82) comportant le cas échéant des organes de serrage (86) pour le bord du modèle de formage (88).

15. Dispositif selon l'une des revendications 11 à 14, caractérisé en ce que la caméra (26) est susceptible de tourner autour de son axe (G) s'étendant verticalement et d'être suspendue de façon inclinable par rapport à celui-ci, sous un angle donné, de préférence sous un angle de plus ou moins 45 degrés.

16. Dispositif selon l'une des revendications 11 à 15, caractérisé en ce qu'à la caméra (26) ou à son axe (G) est/sont associées au moins une lumière d'exploration (27) et/ou d'autres organes d'éclairage (38, 39, 40).

17. Dispositif selon l'une des revendications 11 à 16, caractérisé en ce qu'il présente un organe d'édition (36) pour éditer le contenu de l'écran (30).
